(19) Europäisches Patentamt
European Patent Office
Office européen des brevets

(11) **EP 3 358 034 B1**

(12) **EUROPEAN PATENT SPECIFICATION**

(45) Date of publication and mention
of the grant of the patent:
**19.05.2021   Bulletin 2021/20**

(51) Int Cl.:
*C22C 38/04* *(2006.01)*          *C22C 38/14* *(2006.01)*
*C22C 38/16* *(2006.01)*          *C22C 38/02* *(2006.01)*
*C22C 38/12* *(2006.01)*          *C21D 8/02* *(2006.01)*
*C03C 8/00* *(2006.01)*            *C22C 38/00* *(2006.01)*
*C22C 38/06* *(2006.01)*          *C22C 38/18* *(2006.01)*
*C22C 38/32* *(2006.01)*          *C23D 5/02* *(2006.01)*
*C21D 6/00* *(2006.01)*            *C21D 6/02* *(2006.01)*
*C21D 9/46* *(2006.01)*

(21) Application number: **16850323.3**

(22) Date of filing: **27.09.2016**

(86) International application number:
**PCT/CN2016/100292**

(87) International publication number:
**WO 2017/054699 (06.04.2017 Gazette 2017/14)**

(54) **HOT-ROLLED HIGH-STRENGTH MEDIUM-THICKNESS STEEL PLATE FOR DOUBLE-SIDE ENAMELING AND MANUFACTURING METHOD THEREFOR**

WARMGEWALZTES HOCHFESTES STAHLBLECH MITTLERER DICKE FÜR BEIDSEITIGE EMAILLIERUNG UND HERSTELLUNGSVERFAHREN DAFÜR

TÔLE D'ACIER DE MOYENNE ÉPAISSEUR À HAUTE RÉSISTANCE LAMINÉE À CHAUD POUR L'ÉMAILLAGE DOUBLE FACE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2015   CN 201510628763**

(43) Date of publication of application:
**08.08.2018   Bulletin 2018/32**

(73) Proprietor: **Baoshan Iron & Steel Co., Ltd.**
**Shanghai 201900 (CN)**

(72) Inventors:
 • **WANG, Shuangcheng**
   **Shanghai 201900 (CN)**
 • **SUN, Quanshe**
   **Shanghai 201900 (CN)**
 • **MEI, Bing**
   **Shanghai 201900 (CN)**
 • **WANG, Junkai**
   **Shanghai 201900 (CN)**
 • **ZHANG, Zhichao**
   **Shanghai 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**CN-A- 101 063 189          CN-A- 102 766 822**
**CN-A- 102 796 955          CN-A- 104 694 822**
**CN-A- 105 331 883          JP-A- 2006 037 215**

 • **XIAOMIN YUAN: "Precipitates and hydrogen permeation behavior in ultra-low carbon steel", MATERIALS SCIENCE AND ENGINEERING: A, vol. 452-453, 1 April 2007 (2007-04-01), pages 116-120, XP055558833, AMSTERDAM, NL ISSN: 0921-5093, DOI: 10.1016/j.msea.2006.10.100**
 • **AN VAN CAUTER ET AL: "Relation between formability and precipitates in Ti-IF enamelling steels", STEEL RESEARCH, vol. 70, no. 11, 1 November 1999 (1999-11-01), pages 441-447, XP055558989, DE ISSN: 0177-4832, DOI: 10.1002/srin.199905664**

**Description**

**Technical Field**

The present invention relates to a steel material and a method of manufacturing the same, particularly to a steel for enameling and a method of manufacturing the same.

**Background Art**

Nowadays, medium-thickness steel plates for double-side enameling are mainly used in manufacture fields for building large-size water treatment facilities, chemical engineering facilities, environment protecting facilities, etc. For example, they are used for assembled tanks for treatment of municipal waste effluent and sanitary sewage, and treatment of industrial sewage. For another example, they are used as steel for assembled tanks for anaerobic fermentation, steel for enameled steel plate biogas digesters, or steel for assembled tanks for removable enameled steel plate granaries. A hot-rolled medium-thickness steel plate for double-side enameling is mainly used as a substrate of enameled steel for such assembled tanks.

Enameling steel for assembled tanks is processed by the following process steps: first, a steel plate is bent to a certain radian; then, it is acid pickled and sand blast, followed by removal of oxide scales and rust spots from the steel plate surface; at last, a ground enamel is applied by a wet process, followed by firing. The ground enamel is generally fired at 840-860°C, while firing time depends on a thickness of the steel plate. For a steel plate having a thickness of 5 mm, the firing time is about 10-12 min. After one wet cover enameling and firing process, the cover enamel is generally fired at 800-840°C, while firing time depends on thickness of the steel plate. For a steel plate having a thickness of 5 mm, the firing time is about 10-12 min. Hence, a steel plate for such a use must be well compatible to enameling. Most importantly, it should have both superior scaling resistance and high yield strength. Particularly, this kind of steel plate is required to maintain high yield strength after two enameling-and-firing processes.

A common steel plate can hardly be used as enameling steel, because it tends to bring about scaling flaws. Scaling of an enameled article is caused by hydrogen which enters the steel plate in the course of acid prickling (metals dissolve in an acid to produce hydrogen) and enamel firing (crystalline water contained in clay reacts with metals to generate hydrogen). Particularly, as compared with single-side enameling, when a steel plate is enameled on both sides, the scaling phenomenon occurs more easily, because it's more difficult for hydrogen entrapped in a double-side enameled steel plate to escape. When the enameled article is cooled in air till the porcelain enamel solidifies, the hydrogen has not enough time to escape and reaches an oversaturated state in the steel plate. As a result, a pressure is developed. When the pressure is increased to such an extent that enables peeling of the porcelain layer of the enameled steel, fishscaling occurs. For this reason, in addition to improving enameling processes, the hydrogen storing performance of the steel plate has to be improved too. If a steel plate has a strong hydrogen storing ability, hydrogen will diffuse slowly in the steel plate. As such, when the same enameling process conditions are employed, less hydrogen will enter the steel plate. Moreover, after enameling, the steel plate has a stronger ability to contain hydrogen, facilitating protection of the enameled article from scaling. Crystal boundaries, dislocations, voids, inclusions, precipitated phases and the like are all good traps for storing hydrogen. For enameling steel, it's necessary to regulate steel composition and production process for different enameling uses, so as to ensure sufficient hydrogen storing traps in the steel, and thus impart good scaling performance to the steel plate.

For example, a Chinese patent literature with Pub. No. CN1966753A (titled "HOT-ROLLED STEEL PLATE FOR DOUBLE-SIDE ENAMELING AND MANUFACTURING METHOD THEREFORE"; published on May 23, 2007) discloses a steel for enameling, comprising the following elements (wt.%): C: 0.02%-0.06%, Si: $\leq$0.50%, Mn: 0.15%-0.40%, P: $\leq$0.15%, S: $\leq$0.006%, N$\leq$0.003%, Ti: 0.08%-0.20%, Al$_S$: 0.005%-0.055%, Ti/C: 2.2-5, wherein the structure in a hot-rolled state is ferrite having a grain diameter of 2-20 $\mu$m, and TiC particles having a diameter of 20 nm or less are distributed uniformly in the structure. However, the porosity is increased by no more than 60% according to this technical solution.

For another example, a Chinese patent literature with Pub. No. CN101353758A (titled "HOT-ROLLED HIGH-STRENGTH STEEL PLATE FOR DOUBLE-SIDE ENAMELING AND MANUFACTURING METHOD THEREFORE"; published on January 28, 2009) discloses a steel for double-side enameling, which comprises the chemical elements in mass percentages (wt%): C: 0.05%-0.15%, Si$\leq$1.00%, Mn: 0.50%-2.00% , P$\leq$0.05% , S$\leq$0.05% , Al: 0.01-0.10% , N: 0.008%-0.015% , Ti$\leq$0.05%, V: 0.02-0.2%, with a balance of iron and unavoidable impurities. The technical solution disclosed by this Chinese patent literature is suitable for production of a steel plate having a thickness of less than 5 mm, but not suitable for production of a medium-thickness steel plate having a thickness of 5 mm or more.

Yet, another example, Chinese patent application CN102796955A discloses a enamel steel comprising the following elements in percentage by weight: 0.10 to 0.20 percent of matrix C, 0.20 to 0.40 percent of Si, 0.5 to 1.5 percent of Mn, less than or equal to 0.03 percent of P, less than or equal to 0.03 percent of S, 0.01 to 0.05 percent of Al, less than or equal to 0.008 percent of N, 0.005 to 0.03 percent of Ti, less than or equal to 0.10 percent of V, and the balance of iron and inevitable impurities, wherein C is less than or equal to 0.022 percent of the total weight of the enamel steel in a surface layer with the thickness of 150 to 200 microns.

Furthermore, Non-Patent Literature titled "Precipitates and hydrogen permeation behavior in ultra-low carbon steel" (Xiaomin Yuan, Materials Science and Engineering A, 452-453 (2007), 116-120) studies the precipitates and hydrogen permeation behavior in the ultra-low carbon steel for enameling. During the preparation of samples, two annealing processes, heating at 730 °C for 5 h and 870 °C for 6 min, were adopted after cold-rolling. It was found that the samples contained a large number of fine Ti(C,N) and coarse $Ti_4C_2S_2$ precipitates.

## Summary

One object of the invention is to provide a hot-rolled high-strength medium-thickness steel plate for double-side enameling, wherein the steel plate possesses relatively high yield strength, tensile strength and elongation. In addition, the hot-rolled high-strength medium-thickness steel plate for double-side enameling of the invention also possesses good enameling performance and excellent anti-scaling performance.

To achieve the above object, the invention provides a hot-rolled high-strength medium-thickness steel plate for double-side enameling as defined in claim 1. In particular, the steel plate has a microstructure matrix of ferrite or ferrite + pearlite, wherein a $Ti_4C_2S_2$ precipitated phase and a Ti(C,N) precipitated phase are diffusively dispersed in the matrix, wherein the hot-rolled high-strength medium-thickness steel plate for double-side enameling comprises chemical elements in mass percentages:

C: 0.02-0.15%,
Si: 0.10-0.50%,
Mn: 0.3-1.5%,
S: 0.006-0.035%,
Al: 0.01-0.08%,
N: 0.006-0.015%,
Ti: 0.08-0.20%,
Cu: 0.02-0.10%, and
a balance of iron and unavoidable impurities.

The various chemical elements in the hot-rolled high-strength medium-thickness steel plate for double-side enameling are designed according to the following principle:

Carbon (C): first of all, carbon element is a key element for ensuring the strength of the steel plate. As the carbon content increases, the strength of the steel plate increases, but its plasticity decreases. Secondly, carbon can react with titanium or nitrogen to generate a compound Ti(C, N), and can also react with titanium and sulfur to generate a compound Ti(S, C). These precipitated phases disperse diffusively in the microstructure of the steel plate, and can act as hydrogen storing traps which help avoid the scaling phenomenon. As a comprehensive consideration is given to cost, process control and other aspects, titanium will generally not be added in an excessive amount to immobilize carbon, nitrogen and sulfur completely. Hence, free carbon often exists in the steel plate. When certain conditions are met, a pearlite structure, which has a strengthening function, will form in the steel plate. However, if the carbon content is too high, a large amount of pearlite will come to be in the steel plate. Excessive pearlite not only impairs the steel plasticity, but also leads to a large amount of bubbles when the enamel on the steel plate is fired, resulting in pinhole flaws. Therefore, the carbon content in the hot-rolled high-strength medium-thickness steel plate for double-side enameling of the invention should be defined in the range of 0.02-0.15%.

Silicon (Si): Silicon element in the steel plate has a function of solid-solution strengthening. In addition, silicon can also increase high-temperature deformation resistance of the steel plate, and increase softening resistance of the steel plate during high-temperature firing of the enamel. If the silicon content is too high, the plasticity of the steel plate will degrade, and the adhesion of the steel plate and the porcelain enamel will possibly be affected. Therefore, the silicon content in the hot-rolled high-strength medium-thickness steel plate for double-side enameling of the invention should be defined in the range of 0.10-0.50%.

Manganese (Mn): Addition of manganese can improve the strength of the steel plate. The amount of the manganese element added determines the level of the steel strength. Too much manganese will deteriorate the steel plasticity seriously, while too less manganese will deteriorate the steel strength. The manganese element in the steel plate can also cooperate with the aluminum and silicon elements to remove oxygen. The deoxygenating function of manganese can also promote the effects of titanium. Therefore, the Mn content in the steel plate of the invention should be controlled in the range of 0.3-1.5%.

Sulfur (S): In a steel plate to which no titanium is added, sulfur generally compounds with manganese to form MnS, an inclusion having good plasticity, which will extend as a steel billet is deformed, and finally impair the lateral plasticity and toughness of the steel plate seriously. Hence, the sulfur content should be minimized in a steel plate where no titanium is added. Nevertheless, when titanium is added, sulfur will preferentially form a compound Ti(S, C) with the titanium element. Ti(S, C) is capable of storing hydrogen to some extent, so as to increase the scaling resistance of the steel plate. Therefore, the sulfur content in the hot-rolled high-strength medium-thickness steel plate for double-side enameling of the invention should be defined in the range of 0.006-0.035%.

Aluminum (Al): Aluminum is an element having a strong ability of deoxygenation. In order to guarantee a minimum amount of an oxygen content in the steel, the aluminum content in the hot-rolled high-strength medium-thickness steel plate for double-side enameling of the invention should be controlled in the range of 0.01-0.08%.

Titanium (Ti) and nitrogen (N): Titanium is an element having a strong ability to form carbonitrides. Addition of a suitable amount of titanium facilitates immobilization of nitrogen in the steel plate. Titanium nitride thus formed can prevent excessive growth of austenite grains during heating of the steel billet, and refine original austenite grains. Additionally, titanium in the steel plate can also compound with carbon and sulfur to generate fine precipitated phases such as Ti(C, N), TiS, $Ti_4C_2S_2$, etc. They are present as secondary phase particles, and all of them can act as hydrogen storing traps, so as to increase the scaling resistance of the steel plate. However, if the titanium content is too high, the production cost will be increased on the one hand, and on the other hand, the mechanical properties of the steel plate will be affected negatively. Therefore, the titanium content in the hot-rolled high-strength medium-thickness steel plate for double-side enameling of the invention should be defined in the range of 0.08-0.20%, and the nitrogen content should be defined in the range of 0.006-0.015%.

Copper (Cu): Addition of a minute amount of copper is advantageous for surface deposition of the steel plate, and further increases adhesion between the steel plate and the porcelain enamel, so as to improve the scaling resistance of the steel plate. However, an unduly high content of copper element increases not only production cost, but also acid resistance of the steel plate, which is undesirable for acid pickling of the steel plate before enameling to obtain a well roughened surface, so that the adhesion of the enamel to the steel plate will be affected. Therefore, the copper content in the invention should be defined as Cu: 0.02-0.10%.

Crystal boundaries, dislocations, voids, inclusions, precipitated phases and the like are all good hydrogen storing traps. For the technical solution of the present invention, the $Ti_4C_2S_2$ and Ti(C,N) precipitated phases dispersed diffusively in the ferrite or ferrite + pearlite matrix can ensure wide distribution of sufficient hydrogen storing traps in the steel plate, so as to improve the hydrogen storing performance of the steel plate, which, in turn, helps the steel plate to obtain good scaling resistance.

Further, the hot-rolled high-strength medium-thickness steel plate for double-side enameling of the invention also comprises at least one of: B: 0.001-0.005%, V: 0.02-0.10%, and Nb: 0.01-0.30%.

Boron (B): Addition of an appropriate amount of boron element enables formation of B(C, N) in the steel plate, such that secondary phase particles are added. That's to say, the amount of hydrogen traps is increased, so that the scaling resistance of the steel plate is improved. Additionally, B(C, N) can also act as crystal nuclei to facilitate formation of equiaxed crystals, and prevent crystal grains from growing to large sizes, which is beneficial to improvement of the enameling and mechanical performances of the steel plate. As such, the content of the boron element, if added, should be defined in the range of 0.001-0.005%.

Vanadium (V): Vanadium, having a high solubility in the steel plate, is one of the elements that are most commonly used for microalloying steel and most effective for strengthening. It forms precipitated phase V(C, N) with carbon and nitrogen atoms. The precipitated phase V(C, N) can suppress recrystallization of austenite and prevent crystal grains from growing to large sizes in the course of rolling, so as to refine ferrite grains and increase the strength and toughness of the steel plate. Meanwhile, the precipitated phase V(C, N) can also act as hydrogen storing traps, so as to improve the scaling resistance of the steel plate. Therefore, if it's necessary to add vanadium element into the hot-rolled high-strength medium-thickness steel plate for double-side enameling of the invention, its content should be defined in the range of 0.02-0.10%.

Niobium (Nb): when niobium is present in the steel plate in the form of substitutional solute atoms, it tends to segregate at dislocations, and exhibits a strong dragging effect on dislocation climb, such that nucleation in recrystallization is inhibited. Thus, it has a strong effect in preventing recrystallization. Meanwhile, niobium (Nb) can also form NbC and NbN with elements C and N. NbC and NbN inhibit dislocation pinning and grain boundary migration, so as to increase the steel plate strength, and improve the steel plate toughness at the same time. Therefore, the niobium content in the hot-rolled high-strength medium-thickness steel plate for double-side enameling of the invention should be defined in the range of 0.01-0.30%.

Further, among the unavoidable impurities in the hot-rolled high-strength medium-thickness steel plate for double-side enameling of the invention, P≤0.02%, Cr≤0.10%.

The unavoidable impurities in the hot-rolled high-strength medium-thickness steel plate for double-side enameling of the invention are substantially P and Cr. Phosphorus is a detrimental element that dramatically deteriorates toughness and plasticity of the steel, and thus should be controlled at 0.02% or less. Chromium affects adhesion of the enamel to the steel plate, and thus should be controlled at 0.10% or less.

Further improvements are subject to the dependent claims 1 to 8. For example, the chemical elements in the hot-rolled high-strength medium-thickness steel plate for double-side enameling of the invention further satisfy: $0 \leq C-(Ti-3.43N-1.5S)/4 \leq 0.1$.

The purpose for the above chemical elements to meet the above relationship is to ensure that, except for the carbon element that is immobilized in the form of various precipitated phases in the steel plate, the residual carbon ($\Delta C$, i.e. C-(Ti-3.43N-1.5S)) should be controlled steadily within a suitable range to avoid formation of excessive pearlite structure due to oversaturation of solid dissolved carbon in the steel plate. If the pearlite structure is too much in the steel plate, not only the plasticity of the steel plate will be impaired, but a lot of bubbles or pinhole flaws will be generated during firing of the enamel, such that the surface quality of the enamel on the steel plate will be affected badly. The critical point of the technical solution of the invention lies in the limitation of the residual carbon $\Delta C$ to the range of 0-0.1%.

Furthermore, the chemical elements in the hot-rolled high-strength medium-thickness steel plate for double-side enameling of the invention may further satisfy: $1 \leq 1.185N+5.25S+10.25Ti \leq 2.5$.

In addition to the control over the residual carbon ($\Delta C$), the above elements N, S and Ti added also need to satisfy the relationship $1 \leq 1.185N+5.25S+10.25Ti \leq 2.5$, so as to guarantee formation of sufficiently high weight parts (or volume parts) of Ti(C,N), TiS, $Ti_4C_2S_2$ precipitated phases in the steel plate. As such, a sufficient amount of precipitated phases per unit volume can be formed in rolling and cooling steps, which is an important condition for ensuring that the enamel on both sides of the steel plate should be scaling resistant. Therefore, another critical point of the technical solution of the invention is to allow the N, S and Ti elements to meet the above relationship.

Further, the ferrite in the hot-rolled high-strength medium-thickness steel plate for double-side enameling of the invention may have a grain diameter of 10-30 $\mu$m.

Further, the $Ti_4C_2S_2$ precipitated phase in the hot-rolled high-strength medium-thickness steel plate for double-side enameling of the invention may have a diameter of 100-250 nm.

Further, the Ti(C,N) precipitated phase in the hot-rolled high-strength medium-thickness steel plate for double-side enameling of the invention may have a size of 10-30 nm.

Still further, in the hot-rolled high-strength medium-thickness steel plate for double-side enameling of the invention, the ferrite may have a grain diameter of 10-30 $\mu$m; the $Ti_4C_2S_2$ precipitated phase may have a diameter of 100-250 nm; and the Ti(C,N) precipitated phase may have a size of 10-30 nm.

Further, the hot-rolled high-strength medium-thickness steel plate for double-side enameling of the invention may have a thickness of 5-30 mm, a yield strength of 345-545MPa, a tensile strength of 400-600MPa, and an elongation $\geq 26\%$.

Another object of the invention is to provide a method of manufacturing a hot-rolled high-strength medium-thickness steel plate for double-side enameling, wherein the steel plate obtained by this manufacture method has both high strength and elongation. Meanwhile, this steel plate has good enameling performance and excellent scaling resistance.

In view of the above object of the invention, the method of manufacturing a hot-rolled high-strength medium-thickness steel plate for double-side enameling according to the invention comprises the steps of claim 9, in particular the following steps in order:

(1) Smelting;
(2) Casting;
(3) Heating
(4) Hot rolling: multi-pass rolling is conducted at recrystallization and non-recrystallization temperatures of austenite, and an end rolling temperature is controlled at 800-920 °C;
(5) Cooling: water cooling is conducted at a cooling rate of 5-15 °C/s; a final cooling temperature is 600-750 °C, followed by air cooling to room temperature.

In the above cooling step, when the water cooling is conducted at a cooling rate of 5-15 °C/s, titanium precipitates in the form of compounds which are distributed uniformly in a fine and diffusive state in the matrix of the steel plate. At the same time, by way of parameter control in the cooling step, ferrite structure in the steel plate is refined. However, an unduly high cooling rate is undesirable for full precipitation of the titanium precipitates. Therefore, after the steel plate is water cooled to 600-750 °C, it is further cooled in air to room temperature. On the one hand, the strength of the steel plate can be increased, and on the other hand, the scaling resistance of the steel plate can be improved.

Further, in the above step (3), a heating temperature is 1100-1250 °C.

When the heating temperature is set between 1100-1250 °C, a homogeneous austenite microstructure can be obtained on the one hand, and on the other hand, the titanium compounds can dissolve partially, getting ready for re-precipitation and formation of fine diffusive titanium-containing precipitated phases in subsequent process steps.

Still further, in the above step (4), a total reduction rate is controlled to be no less than 50%.

Further improvements of this method are subject to the dependent claims 10 and 11. In particular, in the above step (4), the end rolling temperature may be controlled in the range of 840-920 °C.

Further, in the above step (5), the final cooling temperature is 650-700 °C.

In the method of manufacturing a hot-rolled high-strength medium-thickness steel plate for double-side enameling according to the invention, by way of control over heating temperature and employment of suitable rolling and cooling control processes, homogeneous microstructures are formed in the steel plate, and titanium compounds in the steel plate dissolve partially and then form fine diffusive titanium-containing precipitated phases such as $Ti(C,N)$, $Ti_4C_2S_2$, wherein the precipitated phases are distributed in the matrix of the microstructures in the steel plate, such that the substrate of the steel plate has high strength and good enameling performance. As a result, the hot-rolled high-strength medium-thickness steel plate for double-side enameling according to the invention can be used widely in related fields to produce large-size water treatment facilities, chemical engineering facilities, environment protection facilities, etc.

The strength of the hot-rolled high-strength medium-thickness steel plate for double-side enameling of the invention is relatively high. The steel plate has a thickness of 5-30 mm, a yield strength ($Rp_{0.2}$ or Rel) of 345-545MPa, a tensile strength (Rm) of 400-600MPa, and an elongation $\geq 26\%$.

In addition, the hot-rolled high-strength medium-thickness steel plate for double-side enameling of the invention possesses good enameling performance, particularly good double-side enameling compatibility. After enameling, the steel plate and the enamel layer have good adhesion therebetween.

Additionally, the hot-rolled high-strength medium-thickness steel plate for double-side enameling of the invention possesses excellent scaling resistance.

The method of manufacturing a hot-rolled high-strength medium-thickness steel plate for double-side enameling according to the invention can provide a steel plate having both high strength and elongation. Meanwhile, this steel plate has good enameling performance and excellent scaling resistance at the same time.

## Description of the Drawings

Fig. 1 is a microstructure image of the hot-rolled high-strength medium-thickness steel plate for double-side enameling in Example A1.

Fig. 2 shows the topography of the precipitated phases in the hot-rolled high-strength medium-thickness steel plate for double-side enameling in Example A1, observed under a transmission electronic microscope.

## Detailed Description

The hot-rolled high-strength medium-thickness steel plate for double-side enameling and the manufacture method thereof according to the invention will be further explained and illustrated with reference to the accompanying drawings and the specific examples. Nonetheless, the explanation and illustration are not intended to unduly limit the technical solution of the invention.

Examples A1-A8

Hot-rolled high-strength medium-thickness steel plates for double-side enameling in Examples A1-A8 of the invention were manufactured according to the following steps (the mass percentages of the various chemical elements in the steel plates of the various examples are shown in Table 1, and the specific process parameters for the steel plates of the various examples are shown in Table 2):

1) Smelting: smelting + vacuum degassing, alloy elements were added into a molten steel, and the alloy elements were adjusted; hydrogen and other detrimental gases were removed from the steel, so as to ensure that the steel plates should have the various chemical elements in the mass percentages as shown in Table 1;

2) Casting: a continuous or die casting process was utilized;

3) Heating: the heating temperature was 1100-1250 °C;

4) Hot rolling: multi-pass rolling was conducted at recrystallization and non-recrystallization temperatures of austenite; a total reduction rate was controlled to be no less than 50%; and an end rolling temperature was controlled at 800-920 °C;

5) Cooling: water cooling was conducted at a cooling rate of 5-15 °C/s; a final cooling temperature was 600-750 °C, followed by air cooling to room temperature.

Preferably, in the above step (4), the end rolling temperature was controlled in the range of 840-920 °C.

Preferably, in the above step (5), the final cooling temperature was controlled in the range of 650-700 °C.

It should be noted that, when the casting in the above step (2) was performed using a die casting process, ingots needed to be passed through an initial rolling machine prior to die casting to be rolled into billets.

Table 1. (wt%, the balance is Fe and other unavoidable impurities except for P and Cr)

| No. | A1 | A2 | A3 | A4 | A5 | A6 | A7 | A8 |
|---|---|---|---|---|---|---|---|---|
| C | 0.055 | 0.048 | 0.052 | 0.086 | 0.057 | 0.045 | 0.060 | 0.037 |
| Si | 0.21 | 0.26 | 0.20 | 0.21 | 0.12 | 0.14 | 0.17 | 0.19 |
| Mn | 0.62 | 0.82 | 0.79 | 0.84 | 0.42 | 0.45 | 0.82 | 0.52 |
| S | 0.025 | 0.026 | 0.018 | 0.005 | 0.028 | 0.020 | 0.006 | 0.026 |
| Al | 0.036 | 0.035 | 0.047 | 0.039 | 0.066 | 0.065 | 0.038 | 0.047 |
| N | 0.009 | 0.006 | 0.0064 | 0.0065 | 0.011 | 0.008 | 0.007 | 0.0084 |
| Ti | 0.16 | 0.15 | 0.18 | 0.16 | 0.17 | 0.14 | 0.15 | 0.09 |
| Cu | 0.072 | 0.069 | 0.051 | 0.040 | 0.080 | 0.045 | 0.052 | 0.051 |
| B | - | 0.0016 | - | 0.0012 | 0.002 | - | 0.0015 | - |
| V | - | - | - | - | - | 0.03 | 0.05 | - |
| Nb | - | - | 0.02 | - | - | - | - | - |
| P | 0.008 | 0.008 | 0.012 | 0.011 | 0.007 | 0.008 | 0.007 | 0.012 |
| Cr | 0.051 | 0.052 | 0.06 | 0.081 | 0.051 | 0.087 | 0.048 | 0.053 |
| M* | 0.032 | 0.025 | 0.018 | 0.052 | 0.034 | 0.024 | 0.03 | 0.028 |
| N* | 1.78 | 1.68 | 1.94 | 1.67 | 1.90 | 1.55 | 1.58 | 1.06 |
| Note: *M= C-(Ti-3.43N-1.5S)/4, and *N=1.185N+5.25S+10.25Ti | | | | | | | | |

Table 2 lists the specific process parameters in the manufacture method for the steel plates of Examples A1-A8 in the present application.

Table 2

| No. | Steel plate thickness (mm) | Step (3) | Step (4) | | Step (5) | |
|---|---|---|---|---|---|---|
| | | Heating temperature (°C) | Total reduction rate (%) | End rolling temperature (°C) | Cooling rate (°C/s) | Final cooling temperature (°C) |
| A1 | 6 | 1200 | 97 | 845 | 10 | 650 |
| A2 | 8 | 1220 | 96 | 845 | 8 | 640 |
| A3 | 24 | 1250 | 88 | 820 | 15 | 650 |
| A4 | 10 | 1200 | 95 | 860 | 10 | 700 |
| A5 | 12 | 1220 | 94 | 870 | 12 | 710 |
| A6 | 15 | 1220 | 90 | 900 | 15 | 610 |
| A7 | 14 | 1220 | 92 | 840 | 12 | 620 |
| A8 | 16 | 1220 | 92 | 830 | 15 | 660 |

Table 3 lists the yield strength, tensile strength and elongation measured after the steel plates of Examples A1-A8 were sampled. In addition, Table 3 further lists the measured results after the specimens of the sampled steel plates of Examples A1-A8 were subjected to 180° cold bend testing.

Furthermore, the steel plates of Examples A1-A8 were wet enameled on both sides, wherein the enameling process mainly comprised the following steps: application of a ground enamel - firing (850 °C x 11.5 min) - application of a cover enamel - firing (820 °C x 11 min). The enameled steel plates were allowed to stand for 48 hours, and then the surfaces of the enameled steel plates on both sides were observed. The results of the observation are listed in Table 3.

Table 3 lists the mechanical performance parameters of the steel plates of Examples A1-A8 in the present application and the enameling performance parameters of the steel plates after enameling treatment.

Table 3

| No. | Mechanical performances | | | | Enameling performances | |
|---|---|---|---|---|---|---|
| | Yield strength/MPa | Tensile strength/MPa | Elongation /% | 180° cold bend d=la | Scaling resistance | Adhesion |
| A1 | 490 | 565 | 32 | No cracking | No scaling on any side | Good |
| A2 | 435 | 520 | 34 | No cracking | No scaling on any side | Good |
| A3 | 418 | 489 | 30 | No cracking | No scaling on any side | Good |
| A4 | 538 | 596 | 27 | No cracking | No scaling on any side | Good |
| A5 | 396 | 454 | 36 | No cracking | No scaling on any side | Good |
| A6 | 355 | 423 | 38 | No cracking | No scaling on any side | Good |
| A7 | 445 | 539 | 33 | No cracking | No scaling on any side | Good |
| A8 | 366 | 442 | 42 | No cracking | No scaling on any side | Good |

As can be seen with reference to Tables 2 and 3, when the thicknesses of the steel plates in Examples A1-A8 are in the range of 6-16 mm, the steel plates in Examples A1-A8 have a yield strength of 355-538 MPa, a tensile strength of 423-565 MPa, and an elongation ≥27%. This indicates that the steel plates in Examples A1-A8 have a relatively high yield strength, a relatively high tensile strength and a relatively high elongation. Meanwhile, after the 180° cold bend testing, none of the steel plates in Examples A1-A8 exhibit a cracking phenomenon. This is desirable for improving the enameled surface quality of the steel plates.

As can be seen from Table 3, after the steel plates in Examples A1-A8 were wet enameled on both sides and stood still for 48 hours, no scaling phenomenon occurs on any enameled surface of the steel plates, and the adhesion between the steel plate and the porcelain enamel is good.

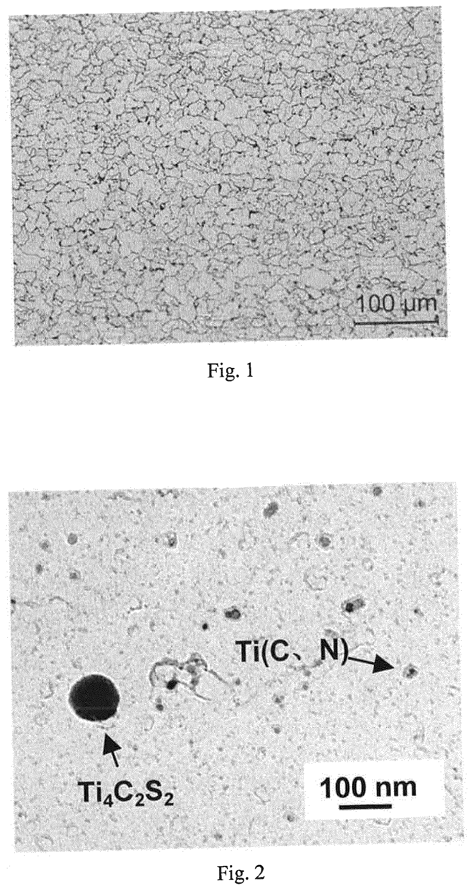

Fig. 1 shows a microstructure image of the hot-rolled high-strength medium-thickness steel plate for double-side enameling in Example A1. Fig. 2 shows the topography of the precipitated phases in the hot-rolled high-strength medium-thickness steel plate for double-side enameling in Example A1, observed under a transmission electronic microscope.

As can be seen from Fig. 1, the matrix of the microstructure of the steel plate is ferrite + pearlite, and $Ti_4C_2S_2$ and Ti(C,N) precipitated phases are diffusively distributed in the matrix, wherein the ferrite has an average grain diameter of 12 $\mu$m.

As can be seen from Fig. 2, $Ti_4C_2S_2$ and Ti(C,N) precipitated phases are diffusively distributed in the matrix, wherein the $Ti_4C_2S_2$ precipitated phase has a diameter of 102 nm, and the Ti(C,N) precipitated phase has a size of 22 nm.

It is to be noted that there are listed above only specific examples of the invention. Obviously, the invention is not limited to the above examples. Instead, there exist many similar variations within the scope of the appendant claims.

**Claims**

1.    A hot-rolled high-strength medium-thickness steel plate for double-side enameling, wherein the steel plate has a microstructure matrix of ferrite or ferrite + pearlite, wherein a $Ti_4C_2S_2$ precipitated phase and a Ti(C,N) precipitated phase are diffusively dispersed in the matrix, wherein the hot-rolled high-strength medium-thickness steel plate for double-side enameling comprises chemical elements in mass percentages:

C: 0.02-0.15%, Si: 0.10-0.50%, Mn: 0.3-1.5%, S: 0.006-0.035%, Al: 0.01-0.08%, N: 0.006-0.015%, Ti: 0.08-0.20%, Cu: 0.02-0.10%, optional at least one of: B: 0.001-0.005%, V: 0.02-0.10%, and Nb: 0.01-0.30%, and a balance of iron and unavoidable impurities, wherein, among the unavoidable impurities, P≤0.02%, and Cr≤0.10%;
wherein the steel plate has a thickness of 5-30 mm, a yield strength of 345-545MPa, a tensile strength of 400-600MPa, and an elongation ≥26%.

2.  The hot-rolled high-strength medium-thickness steel plate for double-side enameling according to claim 1, wherein the chemical elements further satisfy:

$$0 \leq C-(Ti-3.43N-1.5S)/4 \leq 0.1.$$

3.  The hot-rolled high-strength medium-thickness steel plate for double-side enameling according to claim 2, wherein the chemical elements further satisfy:

$$1 \leq 1.185N + 5.25S + 10.25Ti \leq 2.5.$$

4.  The hot-rolled high-strength medium-thickness steel plate for double-side enameling according to claim 1, wherein the ferrite has a grain diameter of 10-30 $\mu$m.

5.  The hot-rolled high-strength medium-thickness steel plate for double-side enameling according to claim 1, wherein the $Ti_4C_2S_2$ precipitated phase has a diameter of 100-250 nm.

6.  The hot-rolled high-strength medium-thickness steel plate for double-side enameling according to claim 1, wherein the Ti(C,N) precipitated phase has a size of 10-30 nm.

7.  The hot-rolled high-strength medium-thickness steel plate for double-side enameling according to claim 3, wherein the ferrite has a grain diameter of 10-30 $\mu$m; the $Ti_4C_2S_2$ precipitated phase has a diameter of 100-250 nm; and the Ti(C,N) precipitated phase has a size of 10-30 nm.

8.  The hot-rolled high-strength medium-thickness steel plate for double-side enameling according to any one of claims 1-7, wherein the steel plate is used for double-side enameling to produce an enameled steel.

9.  A manufacture method for the hot-rolled high-strength medium-thickness steel plate for double-side enameling according to any one of claims 1-7, comprising the following steps in order:

    (1) Smelting;
    (2) Casting;
    (3) Heating
    (4) Hot rolling: multi-pass rolling is conducted at recrystallization and non-recrystallization temperatures of austenite, and an end rolling temperature is controlled at 800-920 °C;
    (5) Cooling: water cooling is conducted at a cooling rate of 5-15 °C/s; a final cooling temperature is 600-750 °C, followed by air cooling to room temperature;

    wherein in step (3), the heating temperature is 1100-1250 °C;
    wherein in step (4), the total reduction rate is controlled to be no less than 50%.

10. The manufacture method according to claim 9, wherein in step (4), the end rolling temperature is controlled at 840-920 °C.

11. The manufacture method according to claim 9, wherein in step (5), the final cooling temperature is 650-700 °C.

**Patentansprüche**

1. Warmgewalzte, hochfeste Stahlplatte mit mittlerer Dicke für doppelseitiges Emaillieren, wobei die Stahlplatte eine Mikrostrukturmatrix aus Ferrit oder Ferrit+Perlit aufweist, wobei eine $Ti_4C_2S_2$-abgeschiedene Phase und eine Ti(C,N)-abgeschiedene Phase diffus in der Matrix verteilt sind, wobei die warmgewalzte, hochfeste Stahlplatte mit mittlerer Dicke für doppelseitiges Emaillieren chemische Elemente in folgenden Masseanteilen aufweist:

   C: 0,02-0,15%, Si: 0,10-0,50%, Mn: 0,3-1,5%, S:0,006-0,035%, Al: 0,01-0,08%, N: 0,006-0,015%, Ti: 0,08-0,20%, Cu: 0,02-0,10%, wahlweise zumindest eines von: B: 0,001-0,005%, V: 0,02-0,10%, und Nb: 0,01-0,30%, und ein Rest aus Eisen und unvermeidbaren Verunreinigungen, wobei, unter den unvermeidbaren Verunreinigungen P≤0,02% und Cr≤0,10%;
   wobei die Stahlplatte eine Dicke von 5-30mm, eine Streckgrenze von 345-545 MPa, eine Zugfestigkeit von 400-600 MPa und eine Dehnung ≥ 26% aufweist.

2. Warmgewalzte, hochfeste Stahlplatte mit mittlerer Dicke für doppelseitiges Emaillieren nach Anspruch 1, wobei die chemischen Elemente ferner folgende Gleichung erfüllen:

$$0 \leq C-(Ti-3,43N-1,5S)/4 \leq 0,1.$$

3. Warmgewalzte, hochfeste Stahlplatte mit mittlerer Dicke für doppelseitiges Emaillieren nach Anspruch 2, wobei die chemischen Elemente ferner folgende Gleichung erfüllen:

$$1 \leq 1,185N+5,25S+10,25Ti \leq 2,5.$$

4. Warmgewalzte, hochfeste Stahlplatte mit mittlerer Dicke für doppelseitiges Emaillieren nach Anspruch 1, wobei der Ferrit einen Korndurchmesser von 10-30 $\mu$m aufweist.

5. Warmgewalzte, hochfeste Stahlplatte mit mittlerer Dicke für doppelseitiges Emaillieren nach Anspruch 1, wobei die $Ti_4C_2S_2$-abgeschiedene Phase einen Durchmesser von 100-250 nm aufweist.

6. Warmgewalzte, hochfeste Stahlplatte mit mittlerer Dicke für doppelseitiges Emaillieren nach Anspruch 1, wobei die Ti(C,N)-abgeschiedene Phase eine Größe von 10-30 nm aufweist.

7. Warmgewalzte, hochfeste Stahlplatte mit mittlerer Dicke für doppelseitiges Emaillieren nach Anspruch 3, wobei der Ferrit einen Korndurchmesser von 10-30 $\mu$m aufweist; die $Ti_4C_2S_2$-abgeschiedene Phase einen Durchmesser von 100-250 nm aufweist; und die Ti(C,N)-abgeschiedene Phase eine Größe von 10-30 nm aufweist.

8. Warmgewalzte, hochfeste Stahlplatte mit mittlerer Dicke für doppelseitiges Emaillieren nach einem der Ansprüche 1-7, wobei die Stahlplatte für doppelseitiges Emaillieren verwendet wird, um einen emaillierten Stahl herzustellen.

9. Herstellungsverfahren für die warmgewalzte, hochfeste Stahlplatte mit mittlerer Dicke für doppelseitiges Emaillieren nach einem der Ansprüche 1-7, aufweisend die folgenden Schritte in der folgenden Reihenfolge:

   (1) Schmelzen;
   (2) Gießen;
   (3) Erwärmen;
   (4) Warmwalzen: Mehrstichiges Walzen wird bei Rekristallisierungs- und Nichtrekristallisierungstemperaturen von Austenit durchgeführt, und eine Endwalztemperatur wird auf 800-920 °C gesteuert;
   (5) Kühlen: Wasserkühlen wird bei einer Kühlungsrate von 5-15 °C/s durchgeführt; eine finale Kühltemperatur beträgt 600-750 °C, gefolgt von einer Luftkühlung auf Raumtemperatur;

   wobei in Schritt (3) die Erwärmungstemperatur 1100-1250 °C beträgt;
   wobei in Schritt (4) die Gesamtreduktionsrate so gesteuert wird, dass sie nicht weniger als 50% beträgt.

10. Herstellungsverfahren nach Anspruch 9, wobei in Schritt (4) die Endwalztemperatur auf 840-920 °C gesteuert wird.

**11.** Herstellungsverfahren nach Anspruch 9, wobei in Schritt (5) die Endwalztemperatur 650-700 °C beträgt.

**Revendications**

**1.** Plaque d'acier d'épaisseur moyenne de résistance élevée laminée à chaud pour un émaillage double face, dans laquelle la plaque d'acier présente une matrice de microstructure de ferrite ou ferrite + perlite, dans laquelle une phase précipitée de $Ti_4C_2S_2$ et une phase précipitée de Ti(C,N) sont dispersées par diffusion dans la matrice, dans laquelle la plaque d'acier d'épaisseur moyenne de résistance élevée laminée à chaud pour un émaillage double face comprend les éléments chimiques en pourcentages en masse :

C : 0,02-0,15 %, Si : 0,10-0,50 %, Mn : 0,3-1,5 %, S : 0,006-0,035 %, Al : 0,01-0,08 %, N : 0,006-0,015 %, Ti : 0,08-0,20 %, Cu : 0,02-0,10 %, éventuellement au moins un de : B : 0,001-0,005 %, V : 0,02-0,10 %, et Nb : 0,01-0,30 %, et un reste de fer et d'impuretés inévitables, dans laquelle, parmi les impuretés inévitables, $P \leq$ 0,02 %, et $Cr \leq 0,10$ % ;
dans laquelle la plaque d'acier présente une épaisseur de 5-30 mm, une limite élastique de 345-545 MPa, une résistance à la traction de 400-600 MPa, et un allongement $\geq$ 26 %.

**2.** Plaque d'acier d'épaisseur moyenne de résistance élevée laminée à chaud pour un émaillage double face selon la revendication 1, dans laquelle les éléments chimiques satisfont de plus :

$$0 \leq C-(Ti-3,43N-1,5S)/4 \leq 0,1.$$

**3.** Plaque d'acier d'épaisseur moyenne de résistance élevée laminée à chaud pour un émaillage double face selon la revendication 2, dans laquelle les éléments chimiques satisfont de plus :

$$1 \leq 1,185N+5,25S+10,25Ti \leq 2,5.$$

**4.** Plaque d'acier d'épaisseur moyenne de résistance élevée laminée à chaud pour un émaillage double face selon la revendication 1, dans laquelle la ferrite présente un diamètre de grain de 10-30 $\mu$m.

**5.** Plaque d'acier d'épaisseur moyenne de résistance élevée laminée à chaud pour un émaillage double face selon la revendication 1, dans laquelle la phase précipitée de $Ti_4C_2S_2$ présente un diamètre de 100-250 nm.

**6.** Plaque d'acier d'épaisseur moyenne de résistance élevée laminée à chaud pour un émaillage double face selon la revendication 1, dans laquelle la phase précipitée de Ti(C,N) présente une dimension de 10-30 nm.

**7.** Plaque d'acier d'épaisseur moyenne de résistance élevée laminée à chaud pour un émaillage double face selon la revendication 3, dans laquelle la ferrite présente un diamètre de grain de 10-30 $\mu$m ; la phase précipitée de $Ti_4C_2S_2$ présente un diamètre de 100-250 nm ; et la phase précipitée de Ti(C,N) présente une dimension de 10-30 nm.

**8.** Plaque d'acier d'épaisseur moyenne de résistance élevée laminée à chaud pour un émaillage double face selon l'une quelconque des revendications 1-7, dans laquelle la plaque d'acier est utilisée pur un émaillage double face pour produire un acier émaillé.

**9.** Procédé de fabrication pour la plaque d'acier d'épaisseur moyenne de résistance élevée laminée à chaud pour un émaillage double face selon l'une quelconque des revendications 1-7, comprenant les étapes suivantes dans l'ordre de :

(1) fusion ;
(2) coulée ;
(3) chauffage ;
(4) laminage à chaud : un laminage à passages multiples est réalisé aux températures de recristallisation et de non-recristallisation d'austénite, et une température de laminage final est contrôlée à 800-920°C ;
(5) refroidissement : un refroidissement à l'eau est réalisé à une vitesse de refroidissement de 5-15°C/s, une température de refroidissement final est de 600-750°C, suivi par un refroidissement à l'air jusqu'à température ambiante ;

dans lequel dans l'étape (3), la température de chauffage est de 1 100-1 250°C ;
dans lequel dans l'étape (4), le taux de réduction total est contrôlé pour ne pas être inférieur à 50 %.

10. Procédé de fabrication selon la revendication 9, dans lequel dans l'étape (4), la température de laminage final est contrôlée à 840-920°C.

11. Procédé de fabrication selon la revendication 9, dans lequel dans l'étape (5), la température de refroidissement final est de 650-700°C.

Fig. 1

Fig. 2

**EP 3 358 034 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1966753 A
- CN 101353758 A

- CN 102796955 A

**Non-patent literature cited in the description**

- **XIAOMIN YUAN.** *Materials Science and Engineering A,* 2007, vol. 452-453, 116-120